# EUROPÄISCHE PATENTSCHRIFT

(11) **EP 0 795 180 B1**
(45) Veröffentlichungstag und Bekanntmachung des Hinweises auf die Patenterteilung: **23.09.1998**
(21) Anmeldenummer: 95943156.0
(22) Anmeldetag: 27.11.1995
(51) Int. Cl.: G21C 17/007

(54) **VORRICHTUNG UND VERFAHREN ZUR INSPEKTION EINES AUSSENMANTELS EINES KERNBEHÄLTERS IM BEREICH EINES IHN UMGEBENDEN THERMISCHEN SCHILDES**
PROCESS AND DEVICE FOR INSPECTING THE OUTER CASING OF A REACTOR VESSEL IN THE AREA OF A THERMAL SHIELD ENCLOSING IT
PROCEDE ET DISPOSITIF D'INSPECTION DE L'ENVELOPPE EXTERIEURE DE LA CUVE D'UN REACTEUR NUCLEAIRE DANS LA ZONE DU BOUCLIER THERMIQUE QUI L'ENTOURE

(30) Priorität: 30.11.1994 DE 4442620
(43) Veröffentlichungstag der Anmeldung: 17.09.1997
(73) Patentinhaber: SIEMENS AKTIENGESELLSCHAFT, 80333 München (DE)
(72) Erfinder: SCHRAMM, Herbert, D-91315 Höchstadt (DE); GOTTFRIED, Roland, D-91094 Langensendelbach (DE); HAAS, Erich, D-90607 Rückersdorf (DE)
(86) Internationale Anmeldenummer: DE9501666
(87) Internationale Veröffentlichungsnummer: WO9617357

(56) Entgegenhaltungen:
- EP-A- 0 418 708
- DE-U- 8 519 751
- US-A- 4 844 858
- PATENT ABSTRACTS OF JAPAN Bd. 017, Nr. 586 (P-1633) 26 Oktober 1993 & JP,A,05 172 986 (TOSHIBA CORP;OTHERS: 01) 13 Juli 1993
- DATABASE WPI Section Ch, Week 8423 Derwent Publications Ltd., London, GB; Class K05, AN 84-143276 XP002000656 & JP,A,59 075 192 (TOKYO SHIBAURA DENKI KK) , 27.April 1984
- PATENT ABSTRACTS OF JAPAN Bd. 018, Nr. 411 (M-1648) 02 August 1994 & JP,A,06 117 762 (MURATA MFG CO LTD) 28 April 1994

## Beschreibung

Die Erfindung bezieht sich auf eine Vorrichtung und ein Verfahren zur Inspektion eines Außenmantels eines Kernbehälters im Bereich eines ihn umgebenden thermischen Schildes.

Zur Überprüfung der Sicherheit nuklearer Kraftwerksanlagen ist es erforderlich, sicherheitsrelevante Anlagenteile, die während ihres regulären Betriebs einer starken Beanspruchung unterliegen, in regelmäßigen Abständen einer Prüfung und Inspektion zu unterziehen. Dazu zählen auch die am Außenmantel eines die Kerneinbauten aufnehmenden Kernbehälters angeordneten Kernbehälter- oder Kernumfassungsschrauben. Diese Kernbehälterschrauben sind jedoch in manchen Anlagen schwer zugänglich, da dort der Kernbehälter eng von einem thermischen Schild umgeben ist. Zwischen dem thermischen Schild und dem Außenmantel des Kernbehälters verbleibt nur ein kleiner Spalt, der beispielsweise zwischen 16 und 50 mm betragen kann und eine Prüfung von außen erschwert.

Der Erfindung liegt nun die Aufgabe zugrunde, eine Vorrichtung zur Inspektion eines Außenmantels eines Kernbehälters anzugeben, die eine Inspektion im räumlich beengten Bereich zwischen dem Kernbehälter und dem ihn umgebenden thermischen Schild ermöglicht. Außerdem liegt der Erfindung die Aufgabe zugrunde, ein Verfahren zur Inspektion eines Außenmantels eines Kernbehälters anzugeben.Vorrichtung und Verfahren zur Inspektion eines Außenmantels eines Kernbehälters im Bereich eines ihn umgebenden thermischen Schildes.

Die genannten Aufgaben werden jeweils gelöst mit den Merkmalen der Patentansprüche 1 bzw. 7.

Eine Vorrichtung zur Inspektion eines Außenmantels eines Kernbehälters im Bereich eines ihn umgebenden thermischen Schildes enthält
a) eine auf einem Boden eines Abstellbeckens drehbar gelagerte Platte, auf die der Kernbehälter abstellbar ist,
b) einen am Boden abgestellten, sich in seiner Längsrichtung parallel zur Drehachse der Platte erstreckenden Mast,
c) einem am Mast in seine Längsrichtung verfahrbaren Vertikalschlitten sowie
d) einen am Vertikalschlitten angeordneten, in den Bereich zwischen dem Außenmantel des Kernbehälters und dem thermischen Schild einbringbaren Ausleger, der an seinem freien Ende ein Inspektionsgerät trägt.

In einer bevorzugten Ausgestaltung der Erfindung ist ein quer zur Längsachse des Mastes verschiebbar auf dem Vertikalschlitten angeordneter Ausleger vorgesehen.

Vorzugsweise ist als Ausleger eine Kette vorgesehen ist.

In einer Ausgestaltung der Erfindung ist ein Ausleger vorgesehen, der an seinem freien Ende einen in seiner Längsrichtung verfahrbaren Inspektionsgeräteträger aufnimmt.

Insbesondere ist auf dem Inspektionsgeräteträger eine Videokamera angeordnet.

In einer weiteren Ausgestaltung der Erfindung ist ein auf dem Inspektionsgeräteträger quer zur Längsachse des Auslegers verschiebbar angeordneter Prüfkopf zur zerstörungsfreien Werkstoffprüfung vorgesehen.

Das Verfahren zur Inspektion eines Außenmantels eines Kernbehälters im Bereich eines ihn umgebenden thermischen Schildes umfaßt gemäß der Erfindung folgende Verfahrensschritte:
a) Auf einem Boden eines Abstellbeckens wird eine drehbare Platte gelagert,
b) auf die Platte wird der Kernbehälter abgestellt,
b) am Boden wird neben dem Kernbehälter ein sich in seiner Längsrichtung parallel zur Drehachse der Platte erstrekkender Mast abgestellt,
c) mit einem am Mast in seine Längsrichtung verfahrbaren Vertikalschlitten wird in den Bereich zwischen dem Außenmantel des Kernbehälters und dem thermischen Schild ein am Vertikalschlitten angeordneter Ausleger eingefahren, der an seinem freien Ende ein Inspektionsgerät trägt.

Zur weiteren Erläuterung der Erfindung wird auf die Ausführungsbeispiele in der Zeichnung verwiesen, in deren

**Figur 1** eine neben einem Kernbehälter angeordnete Vorrichtung gemäß der Erfindung schematisch veranschaulicht ist.

**Figur 2** zeigt in einem vergrößerten Ausschnitt einen in den Zwischenraum zwischen dem thermischen Schild und dem Kernbehälter hineinragenden Ausleger der erfindungsgemäßen Vorrichtung. In

**Figur 3** ist eine weitere vorteilhafte Ausgestaltung der Erfindung veranschaulicht, bei der als Ausleger eine Kette vorgesehen ist.

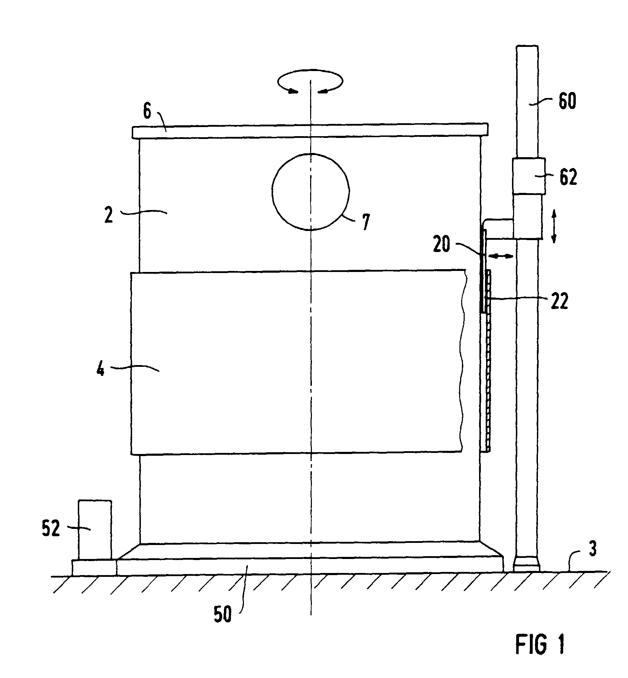

Gemäß **Figur 1** ist ein Kernbehälter 2 auf eine am Boden 3 eines Abstellbeckens befindlichen Platte 50 abgestellt. Der Kernbehälter 2 wird in einem Teilbereich seines Außenmantels von einem thermischen Schild 4 umgeben. Zwischen dem Kernbehälter 2 und dem thermischen Schild 4 befindet sich ein schmaler Spalt 5, der je nach konkreter Ausführungsform zwischen 16 mm und 50 mm betragen kann.

Die Platte 50 ist drehbar auf dem Boden 3 gelagert und ist an einen Drehantrieb 52 gekoppelt, so daß der gesamte Kernbehälter 2 um seine Mittenachse gedreht werden kann.

Neben dem Kernbehälter 2 ist stationär ein Mast 60 auf dem Boden 3 abgestellt, der einen in Richtung seiner Längsachse verfahrbaren Vertikalschlitten 62 trägt.

Am Vertikalschlitten 62 ist ein Ausleger 20, angeordnet, dessen freies Ende in den zwischen thermischem Schild 4 und Kernbehälter 2 befindlichen Zwischenraum oder Spalt 5 eingeführt werden kann. Der Ausleger 20 ist parallel zu seiner Längsachse fahrbar im Vertikalschlitten 62 gelagert, um ein Einbringen des Auslegers 20 in den Spalt 5 auch bei beengten räumlichen Verhältnissen zu ermöglichen. In einer bevorzugten Ausgestaltung ist als Ausleger 20 ein parallel zur Längsachse des Mastes 60 ausstellbarer Teleskopausleger, vorgesehen, mit dem auch tiefere Prüfpositionen im Spalt 5 erreicht werden können. Der Ausleger 20 ist außerdem quer zur Längsachse des Mastes 60 und senkrecht zur Umfangsrichtung des Kernbehälters 2 verschiebbar, d.h. radial zustellbar, auf dem Vertikalschlitten 62 gelagert, um ein genaues Positionieren im Spalt 5 zu ermöglichen. Diese radiale Zustellbewegung des Auslegers 20 ist erforderlich, um einerseits an Hindernissen bei der Bewegung des Vertikalschlittens 62 vorbeizukommen und um andererseits nach Umfahren dieser Hindernisse über dem Spalt 5 positioniert werden zu können. Solche Hindernisse werden beispielsweise durch einen über den Mantel des Kernbehälters 2 vorstehenden Flansch am oberen Rand 6 oder durch einen über die Mantelfläche des Kernbehälters 2 hinausragenden Austrittsstutzen 7 gebildet.

Am freien Ende des Auslegers 20 ist ein Inspektionsgeräteträger 22 für ein zur Inspektion erforderliches Inspektionsgerät, beispielsweise eine Videokamera und/oder ein Ultraschallprüfkopf, angeordnet.

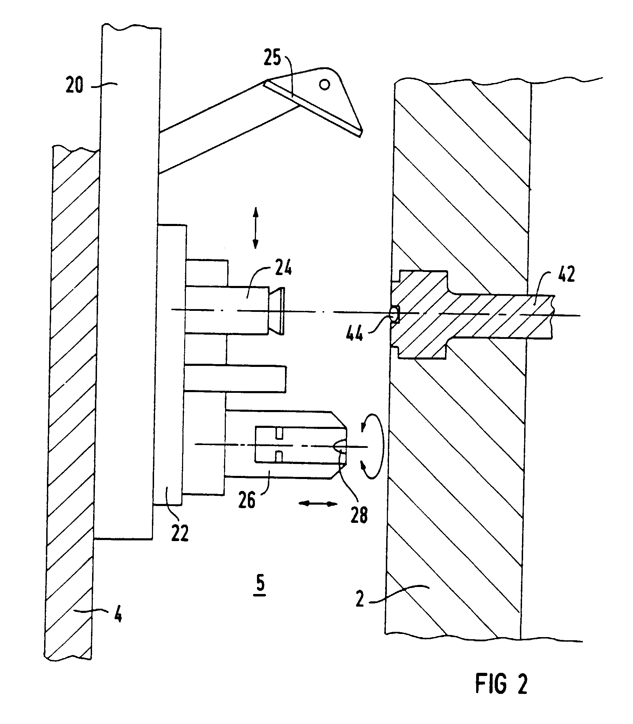

Gemäß **Figur 2** ist der Ausleger 20 mit seinem freien Ende in den ringförmigen Spalt 5 zwischen dem thermischen Schild 4 und dem Kernbehälter 2 eingeführt. Der Ausleger 20 umfaßt an seinem freien Ende eine parallel zu seiner Längsrichtung angeordnete Schlittenführung, auf der ein als Schlitten gestalteter Inspektionsgeräteträger 22 aufgegleist ist, so daß der Inspektionsgeräteträger 22 vertikal verschiebbar ist. Der Inspektionsgeräteträger 22 enthält im Beispiel der Figur eine Videokamera 24 sowie einen Prüfkopf 26 zur zerstörungsfreien Werkstoffprüfung, beispielsweise einen Ultraschallprüfkopf. Der Prüfkopf 26 ist auf dem Inspektionsgeräteträger 22 drehbar um eine senkrecht zur Längsrichtung des Auslegers 20 und senkrecht zur Umfangsrichtung des Kernbehältes 2 orientierte Drehachse gelagert. Außerdem ist der Prüfkopf 26 auf dem Inspektionsgeräteträger 22 in Richtung dieser Drehachse verschiebbar angeordnet.

Mit Hilfe der Videokamera 24 kann der Inspektionsgeräteträger 22 exakt auf eine zu prüfende Schraube 42 im Kernbehälter 2 ausgerichtet werden. Die Schraube 42 wird hierzu genau in eine vorgegebene Bildposition an einem Überwachungsmonitor gefahren. Durch den festgelegten Abstand zwischen der Videokamera 24 und dem Prüfkopf 26 kann dieser daraufhin exakt in eine Position über die Schraube 42 gefahren werden und genau auf den Kopf der Schraube 42, die im Beispiel in der Figur mit einem Sicherungsstift 44 versehen ist, aufgesetzt werden.

Die Drehbarkeit des Prüfkopfes 26 ist dabei erforderlich, um den in seiner Oberflächenform an die Kopfform der Schraube 42 angepaßten Prüfkopf 26 korrekt zur Orientierung des Schraubenkopfes auszurichten. Im Ausführungsbeispiel handelt es sich bei der Schraube 42 um eine Schlitzschraube mit einem Sicherungsstift 44, zu dem eine in der Koppelfläche des Prüfkopfes 26 befindliche Nut 28 ausgerichtet werden muß.

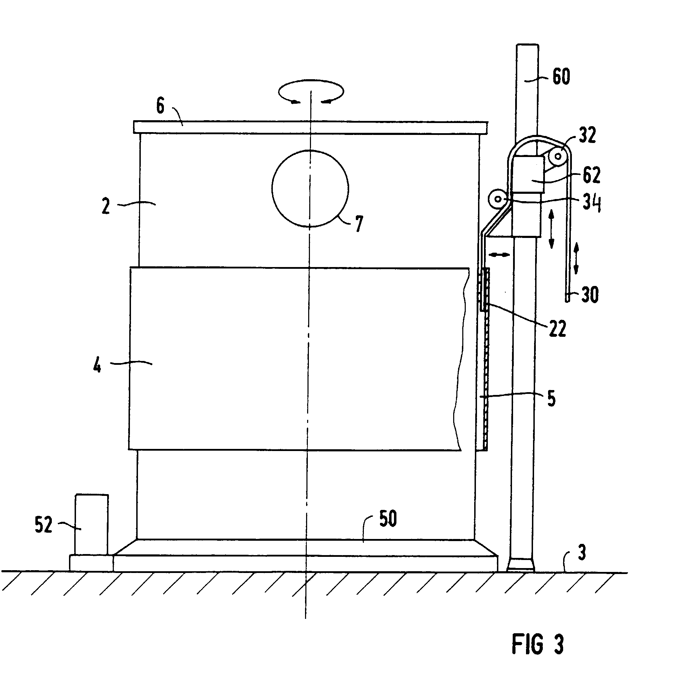

In **Figur 3** ist eine weitere vorteilhafte Ausgestaltung der Erfindung dargestellt, bei der als Ausleger eine Kette 30 vorgesehen ist, die über am Vertikalschlitten 62 angeordnete Führungsrollen 32 geführt ist. Am Vertikalschlitten 62 ist zur Führung der Kette 30 eine Kettenführung 34 vorgesehen, die zur genauen Positionierung quer zur Längsrichtung des Mastes 60 verschoben werden kann. Am Ende der Kette 30 ist in einer vorteilhaften Ausgestaltung ebenfalls eine Schlittenführung für einen Inspektionsgeräteträger angeordnet, wie er in Figur 2 näher dargestellt ist.

In Anwendungsfällen, bei denen der Kernbehälter 2 von einem thermischen Schild umgeben ist, das aus mehreren räumlich voneinander getrennten Ringsegmenten besteht, so daß der Spalt zwischen thermischem Schild und Kernbehälter auch von der Seite erreicht werden kann, kann am Vertikalschlitten ein sich quer zur Längsachse des Mastes erstreckender Ausleger, beispielsweise ein Teleskopausleger angeordnet werden, der entsprechend der Krümmung der Wand des Kernbehälters gebogen und in Umfangsrichtung verschiebbar am Vertikalschlitten gelagert ist.

## Patentansprüche

1. Vorrichtung zur Inspektion eines Außenmantels eines Kernbehälters (2) im Bereich eines ihn umgebenden thermischen Schildes (4), mit
a) einer auf einem Boden (3) eines Abstellbeckens drehbar gelagerten Platte (50), auf die der Kernbehälter (2) abstellbar ist,
b) einem am Boden (3) abgestellten, sich in seiner Längsrichtung parallel zur Drehachse der Platte (50) erstreckenden Mast (60),
c) einem am Mast (60) in seine Längsrichtung verfahrbaren Vertikalschlitten (62) sowie
d) einem am Vertikalschlitten (62) angeordneten, in den Bereich zwischen dem Außenmantel des Kernbehälters (2) und dem thermischen Schild (4) einbringbaren Ausleger (20), der an seinem freien Ende ein Inspektionsgerät trägt.

2. Vorrichtung nach; Anspruch 1, bei der der quer zur Längsachse des Mastes (60) verschiebbar auf dem Vertikalschlitten (62) angeordnete Ausleger (20) vorgesehen ist.

3. Vorrichtung nach einem der vorhergehenden Ansprüche, bei der als Ausleger eine Kette (30) vorgesehen ist.

4. Vorrichtung nach einem der vorhergehenden Ansprüche, mit einem Ausleger (20, 30), der an seinem freien Ende einen in seiner Längsrichtung verfahrbaren Inspektionsgeräteträger (22) aufnimmt.

5. Vorrichtung nach Anspruch 4, mit einer auf dem Inspektionsgeräteträger (22) angeordneten Videokamera (24).

6. Vorrichtung nach Anspruch 4 oder 5, mit einem auf dem Inspektionsgeräteträger (22) quer zur Längsachse des Auslegers (20) verschiebbar angeordneten Prüfkopf (26) zur zerstörungsfreien Werkstoffprüfung.

7. Verfahren zur Inspektion eines Außenmantels eines Kernbehälters (2) im Bereich eines ihn umgebenden thermischen Schildes (4) mit folgenden Verfahrensschritten:
a) Auf einem Boden (3) eines Abstellbeckens wird eine drehbare Platte (50) gelagert,
b) auf die Platte (50) wird der Kernbehälter (2) abgestellt,
b) am Boden (3) wird neben dem Kernbehälter (2) ein sich in seiner Längsrichtung parallel zur Drehachse der Platte (50) erstreckender Mast (60) abgestellt,
c) mit einem am Mast (60) in seine Längsrichtung verfahrbaren Vertikalschlitten (62) wird in den Bereich zwischen dem Außenmantel des Kernbehälters (2) und dem thermischen Schild (4) ein am Vertikalschlitten (62) angeordneter Ausleger (20) eingefahren, der an seinem freien Ende ein Inspektionsgerät trägt.

## Claims

1. Device for the inspection of an outer shell of acore vessel (2) in the region of a thermal shield (4) surrounding it, having
a) a plate (50) which is rotatably mounted on a base (3) of a storage basin, onto which plate the core vessel (2) can be put down,
b) a mast (60) which is put down on the base (3) and the longitudinal direction of which extends in parallel with the axis of rotation of the plate (50),
c) a vertical slide (62) which can travel on the mast (60) in the longitudinal direction thereof, and
d) an extension arm (20) which is arranged on the vertical slide (62) and can be brought into the region between the outer shell of the core vessel (2) and the thermal shield (4) and the free end of which carries an inspection apparatus.

2. Device according to claim 1, in which is provided the extension arm (20) which is arranged on the vertical slide (62) in a manner such that it can be shifted transversely with respect to the longitudinal axis of the mast (60).

3. Device according to one of the preceding claims, in which a chain (30) is provided as an extension arm.

4. Device according to one of the preceding claims, having an extension arm (20, 30), the free end of which receives an inspection-apparatus carrier (22) which can travel in the longitudinal direction of said extension arm.

5. Device according to claim 4, having a video camera (24) arranged on the inspection-apparatus carrier (22).

6. Device according to claim 4 or 5, having a probe (26) arranged on the inspection-apparatus carrier (22) in a manner such that it can be shifted transversely with respect to the longitudinal axis of the extension arm (20), for non-destructive material testing.

7. Method for the inspection of an outer shell of a core vessel (2) in the region of a thermal shield (4) surrounding it, having the following steps:
a) a rotatable plate (50) is mounted on the base (3) of a storage basin,
b) the core vessel (2) is put down on the plate (50),
b) (sic) a mast (60), the longitudinal direction of which extends in parallel with the axis of rotation of the plate (50), is put down on the base (3) next to the core vessel (2),
c) with a vertical slide (62) which can travel on the mast (60) in the longitudinal direction thereof, there is brought into the region between the outer shell of the core vessel (2) and the thermal shield (4) an extension arm (20) which is arranged on the vertical slide (62) and the free end of which carries an inspection apparatus.

## Revendications

1. Dispositif d'inspection de l'enveloppe extérieure d'une cuve (2) de réacteur nucléaire dans la région d'un bouclier thermique (4) qui l'entoure, comprenant
a) une plaque (50) montée à rotation sur le fond (3) d'un bassin de dépose, sur laquelle la cuve (2) de réacteur peut être déposée,
b) un poteau (60), placé sur le fond (3) et dont la direction longitudinale s'étend parallèlement à l'axe de rotation de la plaque (50),
c) un coulisseau vertical (62) pouvant être déplacé en direction longitudinale sur le poteau (60), et
d) une flèche (20), disposée sur le coulisseau vertical (62), qui peut être introduite dans la région située entre l'enveloppe extérieure de la cuve (2) de réacteur et le bouclier thermique (4) et qui porte un appareil d'inspection à son extrémité libre.

2. Dispositif suivant la revendication 1, dans lequel il est prévu que la flèche (20) est disposée sur le coulisseau vertical (62) en pouvant être déplacée transversalement à l'axe longitudinal du poteau (60).

3. Dispositif suivant l'une des revendications précédentes, dans lequel une chaîne (30) est prévue comme flèche.

4. Dispositif suivant l'une des revendications précédentes, comprenant une flèche (20, 30) qui reçoit à son extrémité libre un support (22) d'appareils d'inspection qui peut être déplacé en direction longitudinale.

5. Dispositif suivant la revendication 4, comprenant une caméra vidéo (24) disposée sur le support (22) d'appareils d'inspection.

6. Dispositif suivant la revendication 4 ou 5, comprenant une tête de contrôle (26) pour le contrôle non destructif de matériaux, qui est disposée sur le support (22) d'appareils d'inspection en pouvant se déplacer transversalement à l'axe longitudinal de la flèche (20).

7. Procédé d'inspection de l'enveloppe extérieure dune cuve (2) de réacteur nucléaire dans la région d'un bouclier thermique (4) qui l'entoure, comprenant les étapes suivantes :
a) une plaque rotative (50) est montée sur le fond (3) d'un bassin de dépose,
b) la cuve (2) de réacteur nucléaire est déposée sur la plaque (50).
c) un poteau (60), dont la direction longitudinale s'étend parallèlement à l'axe de rotation de la plaque (50), est placé sur le fond (3) à côté de la cuve (2) de réacteur,
d) au moyen d'un coulisseau vertical (62) pouvant être déplacé en direction longitudinale sur le poteau (60). on introduit, dans la région située entre l'enveloppe extérieure de la cuve (2) de réacteur et le bouclier thermique (4), une flèche (20) qui est disposée sur le coulisseau vertical (62) et qui porte un appareil d'inspection à son extrémité libre.
